# EUROPEAN PATENT SPECIFICATION

(11) **EP 0 526 492 B1**
(45) Date of publication and mention of the grant of the patent: **12.07.2000**
(21) Application number: 91907804.8
(22) Date of filing: 24.04.1991
(51) Int. Cl.: G01N 21/31, G01N 21/87, G01N 21/65, B07C 5/342

(54) **METHOD AND APPARATUS FOR EXAMINING AN OBJECT**
VERFAHREN UND VORRICHTUNG ZUR UNTERSUCHUNG EINES GEGENSTANDES
PROCEDE ET APPAREIL DE CONTROLE D'UN OBJET

(30) Priority: 24.04.1990 GB 9009132
(43) Date of publication of application: 10.02.1993
(73) Proprietor: GERSAN ESTABLISHMENT, Fl-9490 Vaduz (LI)
(72) Inventor: SMITH, Martin, Phillip, Berkshire RG10 8BB (GB); SMITH, Robin, Wyncliffe, Surrey CR0 6XJ (GB); WELBOURN, Christopher, Mark Tythebarn Cottage, Maidenhead, Berks SL6 3QF (GB)
(74) Representative: Lyndon-Stanford, Edward Willoughby Brooke
(86) International application number: GB9100653
(87) International publication number: WO9116617

(56) References cited:
- EP-A- 0 345 949
- EP-A- 0 346 045
- WO-A-86/07457
- DE-B- 2 011 931
- US-A- 3 064 136
- US-A- 3 794 425
- US-A- 4 259 011

## Description

### Background of the Invention

The invention is concerned with distinguishing natural diamonds from synthetic diamonds.

WO 86/07457 discloses a method for distinguishing diamond from diamond like simulant, by visually detecting the Raman signal emitted from a specimen which is irradiated with suitable exciting radiation. Diamond simulant comprises dense non-diamond material (eg. metal oxides, particularly zirconium dioxide) which has similar refractive properties to diamond. Synthetic diamond comprises diamond material (ie. crystalline carbon) produced by an industrial process.

The technique disclosed by WO 86/07457 is only suitable for distinguishing diamond from diamond-like simulant. All diamonds, natural or synthetic, show the Raman emission when irradiated with suitable exciting irradiation, and cannot be distinguished by this technique.

### The Invention.

The present invention provides a method of classifying a diamond as belonging to a first class of definitely natural diamonds or to a second class consisting of diamonds which may or may not be natural, comprising irradiating the diamond, observing the diamond through a narrow band pass filter that passes radiation of a first wavelength corresponding substantially to a characteristic wavelength of the first class of diamonds, cycling the wavelength passed by the filter a number of times through each wavelength of a set of wavelengths including the characteristic wavelength and at least two reference wavelengths by repeatedly rotating the filter, making a plurality of observations of the diamond at each of the wavelengths of said set and storing each of the observations, and using the observations at the wavelengths of said set to classify the diamond as belonging to the first class or to the second class.

The present invention also provides apparatus for classifying a diamond as belonging to a first class of definitely natural diamonds or to a second class consisting of diamonds which may or may not be natural, comprising means for irradiating the diamond, a filter that passes radiation at a first wavelength corresponding substantially to a characteristic wavelength of the first class of diamonds, means for repeatedly rotating the filter to cyclically alter the band of radiation passed by the filter through each wavelength of a set of wavelengths including the first wavelength and at least two reference wavelengths different from the first wavelength, means for giving signals dependent upon the intensity of radiation passing through the filter, means for storing each of the signals and means for classifying the diamond as belonging to the first class of diamonds or to the second class of diamonds on the basis of the signals.

The present invention enables diamonds to be examined and classified by operators with little scientific or technical training.

Preferably, the diamond is irradiated with light in the longwave ultraviolet/visible part of the spectrum and the absorption spectrum of the diamond is studied by measuring the intensity of light absorbed by the diamond.

The diamond may be illuminated with a lamp running off a mains electricity supply. A change in the lamp supply voltage can alter the temperature of the emission source of the lamp and thus the spectral distribution of its output energy may vary. Provision should be made to detect this variation so that parameters such as ratios between transmitted wavelengths can be corrected for errors introduced by the spectral variation. By making more than two observations of the absorption spectrum of the object, any spectral shift due to lamp variation can be detected and compensated for.

The absorption (or, equivalently, transmission) spectrum may be observed by measuring the absorption at 415.5nm and at least two slightly different reference wavelengths, say 410nm and 418.5nm. The absorption should be measured at at least three wavelengths very close together, as this will help to clearly identify a characteristic absorption. 415.5nm is a very strong absorption, characteristic of diamonds of type IaAB. 418.5nm and 410nm fall outside the absorption peak for this characteristic absorption and so the absorption is relatively low. In general, diamonds of different types to IaAB do not show a very strong absorption at 415.5nm, and even if there is some absorption, it will not be very much different from the absorption at 410nm and 418.5nm.

Accordingly, diamonds of type IaAB can be positively distinguished, and as diamonds of this class of diamonds are effectively always natural in origin, the invention allows all diamonds encountered to be classified as belonging to a class consisting of definitely natural diamonds or a class consisting of diamonds which may or may not be natural. This will be explained further below.

The apparatus may be very simple to use and construct, as it only has a small number of components. The whole apparatus may only occupy a space of about 25 x 10 x 15 cm, being suitable for use on a bench top. The method does not require any great skill on the part of the operator and is suitable for producing an answer very quickly.

### The Drawings.

The invention will be further described by way of example, with reference to the accompanying drawings, in which:-
Figure 1 shows an example of a portion of the absorption spectrum of type Ib diamond;
Figure 2 shows an example of a portion of the absorption spectrum of type IaAB diamonds;
Figure 3 shows a high resolution transmission spectrum for a type IaAB diamond, between 410nm and 420nm;
Figure 4 shows an apparatus for observing a diamond according to the invention;
Figure 5 shows the filter of the apparatus of Figure 4 in first and second positions;
Figure 6 shows the variation with angle of incidence of band pass characteristics of the filter of Figures 4 and 5; and
Figure 7 shows the use of three observations to fit a curve.

### Figures 1 to 3

One way of classifying diamonds is according to their spectroscopic properties. The absorption spectrum of a diamond in the visible region will determine its colour. To a certain extent, it is possible to associate each type of diamond with a range of structure, concentration and composition of impurity defects. An analysis of diamonds in this manner gives the following classification.

### Type I

This general type class is defined as the class of diamonds which have a measurable defect induced infra-red absorption in the 1-phonon region (below 1332cm⁻¹). The defects result from the incorporation of nitrogen atoms into the crystal lattice substituting for carbon atoms during growth of the diamond. Natural type I diamonds will typically contain several hundred to a few thousand ppm of nitrogen. The content of nitrogen in synthetic diamonds can be controlled during the process of synthesising the diamonds. This gives a range of nitrogen atom content of a few hundred ppm to practically zero in synthetic diamonds.

The general class type I is divided into the following subtypes:

### Type Ib

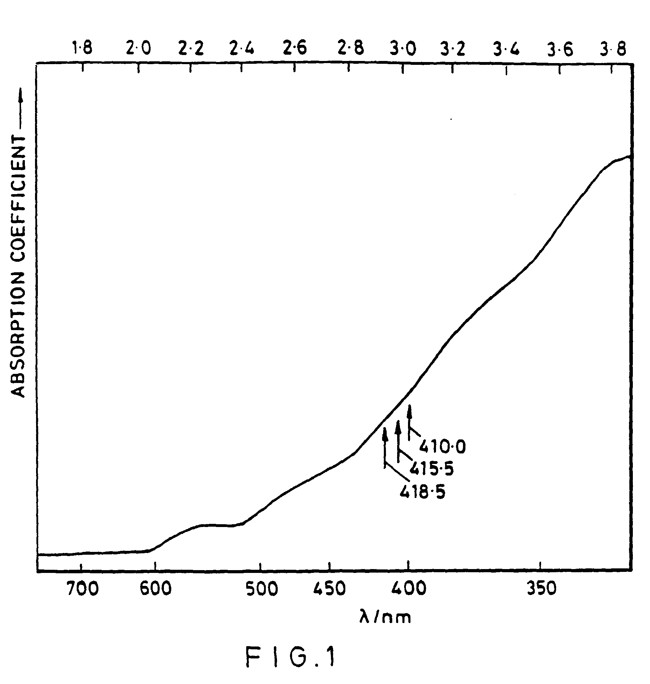

In this type of diamond single nitrogen atoms are substituted for single carbon atoms at random throughout the lattice. This gives rise to an optical absorption starting at about 600nm which continues with increasing strength into the longwave ultra-violet region (Figure 1). This gives rise to the so-called canary yellow colour shown by some diamonds. Type Ib diamonds represent a non-equilibrated form of diamond. Diamonds are formed at conditions of very high temperature and pressure, and if the diamond is maintained at these conditions impurity nitrogen atoms will tend to aggregate. Natural diamonds were usually maintained at these equilibrating conditions for geologically significant periods of time and accordingly type Ib diamonds are rare in nature (much less than 1% of all natural diamonds). On the other hand, synthetic diamonds are not maintained at equilibrating conditions and accordingly most synthetic diamonds are type Ib.

### Type Ia

This class comprises diamonds in which the nitrogen has migrated to form more complex defects. There are two principal forms of nitrogen defect which are found in type Ia diamonds, the A form and the B form. The A form comprises pairs of nitrogen atoms on nearest-neighbour substitutional sites. The B form of nitrogen is believed to comprise a complex of four substitutional nitrogen atoms surrounding a vacancy. The ratio of the concentration of A type defects to B type defects varies continuously, the extreme ends of the sequence being labelled type IaA and type IaB. Pure type IaB diamonds are very rare. Synthetic type Ib diamonds can be converted to type IaA by a high-temperature and high-pressure treatment.

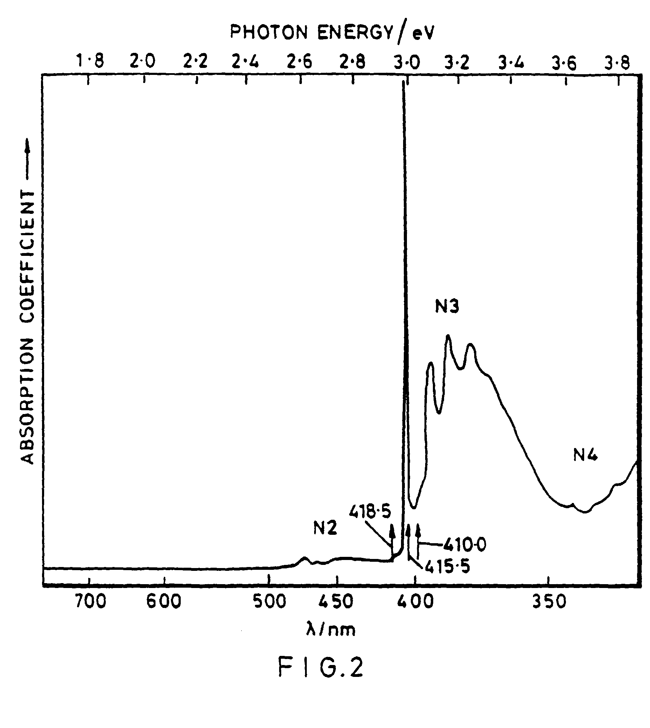

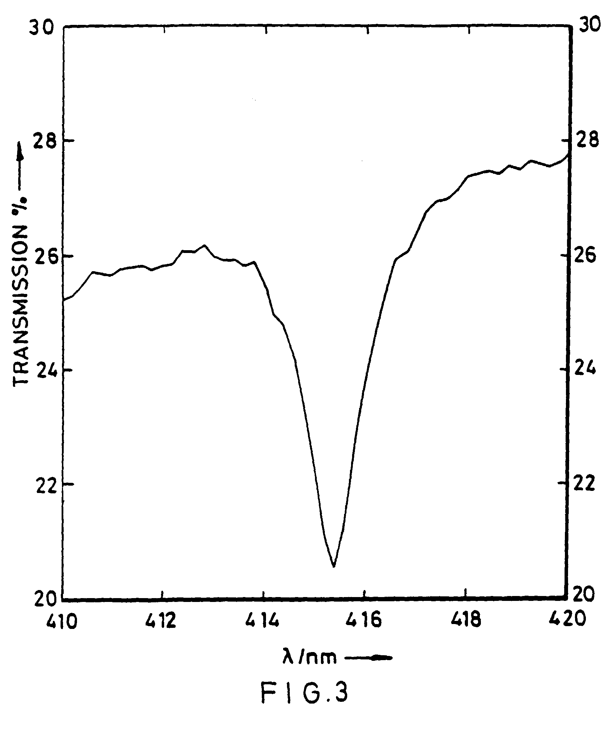

Type IaA diamonds have no absorption in the visible region of the spectrum so they are colourless. There is very little visible absorption associated with B centres, and as a result IaB diamonds are colourless. Most natural diamonds contain both A and B centres and are known as type IaAB. In addition to the two principle forms of nitrogen defect, they contain two "by-products" of the nitrogen aggregation process: platelets and N3 centres. Platelets are interstitial planar defects, a few tens of nanometres in diameter lying on cube planes. These give rise to a peak in the infra-red spectrum. N3 centres comprise three co-planar nitrogen atoms probably surrounding a vacancy. N3 centres give rise to absorption between 490nm and 350nm with a sharp zero-phonon line at 415.5nm. This absorption in the blue/violet region causes the so-called cape yellow colour exhibited to a greater or lesser extent by the vast majority of natural diamonds (Figure 2). Figure 3 is a high resolution transmission spectrum showing the 415.5nm absorption of a type IaAB diamond in more detail. It can be seen that there is a strong decrease in transmission at about 415.5nm, transmission being much higher at other wavelengths, for example 410nm.

### Type IIa

This class comprises diamond in which nitrogen is only present in trace amounts, of the order of 1 ppm. There is often a form of background absorption at the shorter wavelength end of the visible spectrum, giving some of these diamonds a generally brown colour. This near absence of nitrogen in diamonds rarely occurs in nature (less than 2% of natural diamonds are type IIa) but can be assured in the production of synthetic diamonds.

### Type IIb

This is a very rare class of semiconducting diamonds in nature. The diamonds contain trace amounts of substitutional boron as semiconductor acceptor centres which give the diamonds a bluish colour due to the tail of the photoionization spectrum at the acceptor centre. Type IIb diamonds are generally natural, but synthetic diamonds containing added boron can be produced.

In all, most natural diamonds are type IaAB and IaA, only about 2% being II, Ib or IaB.

### Figure 4

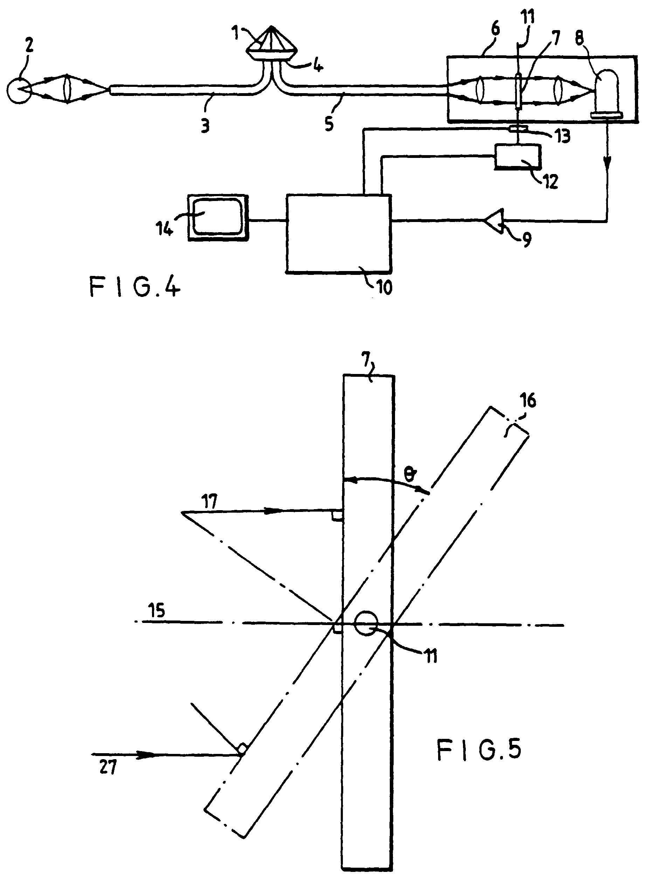

Figure 4 is a schematic drawing of apparatus according to the invention, which is set up to classify a finished diamond as definitely natural or not definitely natural.

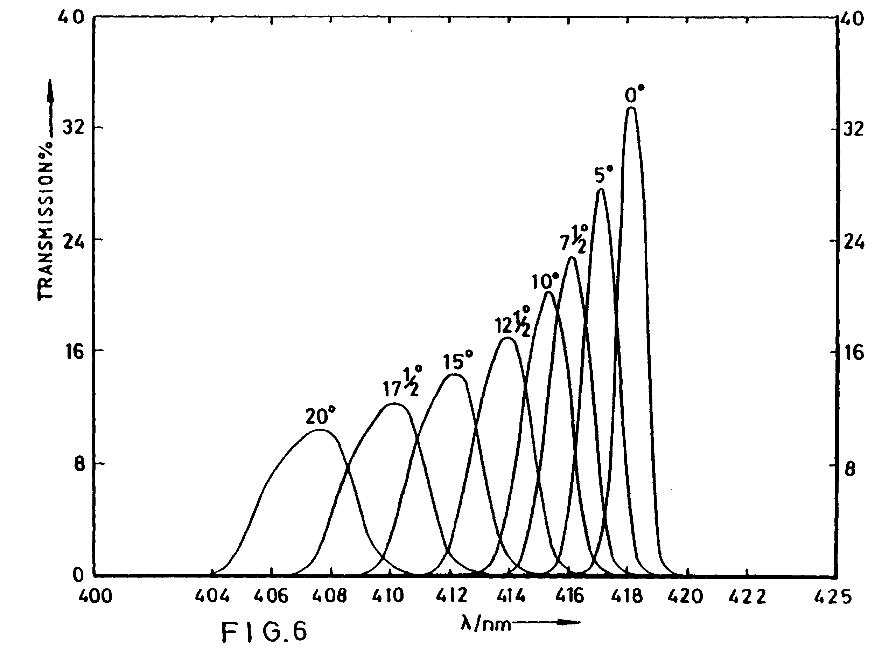

A diamond 1 is illuminated with radiation generated by a halogen lamp 2 of a suitable wavelength. The illuminating radiation is fed to the diamond via a fibre optic 3 and, in the case of a brilliant cut diamond, the light is fed in through the table of the diamond. A brilliant cut diamond is intended to be viewed through the table and is so shaped that the maximum amount of light is reflected by the lower faces of the diamond back out of the table 4. In order to study the absorption spectrum of the diamond, a second fibre optic 5 is provided to collect light leaving the diamond via the table 4. Transmitted light is fed via the fibre optic 5 into detector apparatus 6 which includes a filter 7. A photomultiplier tube or other photodetector 8 is provided to give a signal dependent upon the intensity of light passed by the filter 7, which signal is fed to an amplifier 9 and then to a microprocessor 10. The filter 7 is rotatable about an axis 11 to transmit light at different wavelengths. Rotation can be driven by a motor 12 or by hand. The motor 12 can be controlled by the microprocessor 10, a transducer 13 comprising a shaft encoder or the like being provided to give a signal indicating the position of the filter 7. In order for the readings taken by the apparatus to be simply presented and easily understood, a visual display unit (VDU) 14 may be provided receiving signals from the microprocessor 10.
As shown in Figure 5, the filter 7 can be rotated about an axis 11 normal to its optical axis 15 into a tilted position (as shown at 16). The band pass characteristics of the filter 7 vary with the angle θ between the optical axis 15 of the filter and the direction of incident light 17. Figure 6 shows the band pass characteristics of a CWL = 418.5nm filter at various values of θ. It may be seen that as θ increases, the maximum of the transmission moves to lower wavelength, the transmission maximum decreases in intensity and the width of the band passed increases.

The full width at half maximum for the filter where θ = 0 is 1nm. Such a filter is manufactured by Omega Optical Company in the USA.

Thus, if the filter 7 is tilted through a variety of angles θ by the motor 12, a region of the absorption spectrum of the diamond 1 may be scanned and sampled.

The apparatus shown in Figure 4 can be used to classify a diamond as belonging to type IaAB or not. A filter 7 having the band pass characteristic shown in Figure 6 is used, so that a signal can be derived representive of the absorption of light at 415.5nm. On its own, this signal does not give much useful information unless it is normalized, because the signal will vary with the size of the diamond. Furthermore, diamonds of type IaAB will vary greatly in the absorption co-efficient at 415.5nm between themselves, and no positive range can be assigned to clearly identify a diamond of type IaAB on the basis of this one uncorrected absorption signal alone. Accordingly, a second measurement is taken at a reference wavelength of 410nm for example. This lies substantially outside the absorption peak 415.5nm and is of higher energy. In general, for non type IaAB diamonds measurements at 415.5nm and 410nm would be expected to be very similar in size, the absorption at higher wavelength being lower if there were any difference. In the case of diamonds of type IaAB, the absorption at longer wavelength is expected to be much stronger.

The lamp 2 used to illuminate the diamond may be an halogen lamp, for example a 12 volt, 12 watt Thorn type M64 with a Spindler and Hoyer lens 063097. This form of lamp operates at about 3,000K with a peak at the red end of the visible spectrum. The wavelengths to be observed lie on a steep part of the thermal radiation curve. Accordingly, if the temperature of the lamp shifts to, say, 3,200K due to a perturbation in the power supply, the shape of the curve will vary and the intensity of light at the wavelengths to be observed will vary quite markedly, the ratio of the intensities between the two irradiating wavelengths will vary, and so the reading based upon the intensity of radiation absorbed at these wavelengths by the diamond can be in error. In order to detect this error, a third measurement may be made at a wavelength of, for example 418.5nm. Preferably, a series of measurements are made in the region 418.5 to 410nm, and the absorption results interpreted by a curve fitting technique, operated by the microprocessor 10 to detect if a 415.5nm absorption is in fact present.

The filter 7 may be rotated at high speed (3,000 rpm) about its axis 11 and the absorption of light at various wavelengths (deducible from the angle θ of the filter, measured by transducer 13) measured many times over and stored by the microprocessor. A mass of data is obtained quickly and simply which can be analysed by a statistical technique to provide more accurate information on the absorption characteristics of the diamond. This improves the repeatability of the test and reduces the error.

The microprocessor 10 can be programmed to compare the readings directly and to produce a signal representative of whether the diamond is natural or should be tested further, or all the readings may be shown numerically, or graphically on the VDU 14.

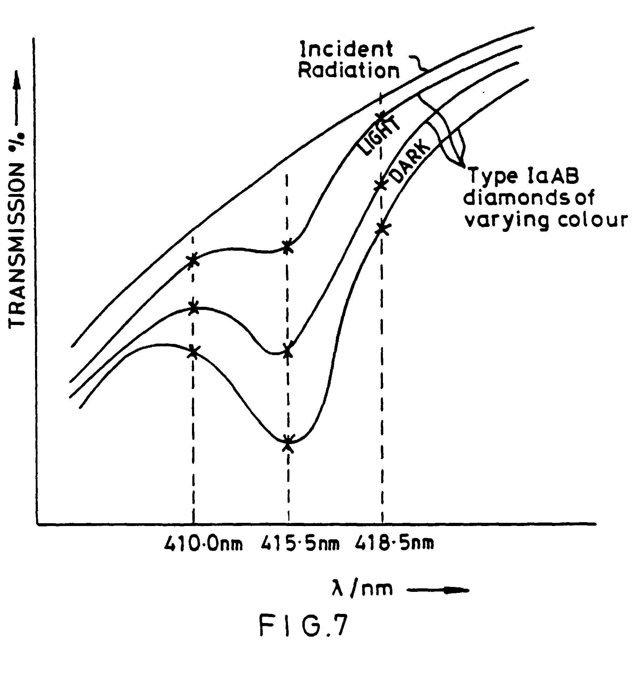

Figure 7 shows how the three measurements at 410, 415.5 and 418.5nm can be used in the microprocessor to plot a curve showing the absorption characteristics of the diamond in this region of the spectrum, so that an absorption at 415.5nm can be clearly identified.

Three absorption curves are shown, for diamonds of type IaAB showing the cape yellow colour with varying degrees of intensity.

Instead of correcting the first and second wavelength measurements using a third wavelength and a curve fitting technique, the spectrum of the lamp 2 may be sampled directly, using a reference channel. A third fibre optic may be used, leading directly from the lamp 2 to a detector, which passes data to the microprocessor 10.

Being able to classify a diamond as type IaAB or not will be useful to the jeweller or other craftsman in identifying natural diamonds, as the vast majority of natural diamonds belong to class IaAB and (because of the complexity of the defects and the fact that they take a long time to develop) synthetic diamonds are effectively never type IaAB. Thus the apparatus of the invention can be set up as above, to divide all diamonds into one of two classes:
definitely natural;
possibly natural, possibly synthetic;

The number of natural diamonds classified in the second class by the apparatus of Figure 4 will be very small (about 2%), comprising type Ia, Ib, IIa, IIb and IaA or IaB diamonds, which are all very rare.

The apparatus of Figure 4 can also be used to measure the colour of a cape diamond, by measuring the strength of the 415.5nm absorption.

In the apparatus shown in Figure 4, the lamp 2 may be a 12 volt 12 watt halogen lamp manufactured by Thorn, type M64, using a lens 063097 manufactured by Spindler and Hoyer Limited. Suitable fibre optic cable is manufactured by Schott. The lenses shown in the detector 6 are, from left to right, a lens 063097 and lens 063045 respectively, both manufactured by Spindler and Hoyer. The photomultiplier tube 8 can be of the type manufactured by Hamamatsu KK.

The present invention has been described above purely by way of example, and modifications can be made within the spirit of the invention.

## Claims

1. A method of classifying a diamond (1) as belonging to a first class consisting of definitely natural diamonds or to second a class consisting of diamonds which may or may not be natural, comprising
irradiating the diamond (1);
observing the diamond through a narrow band pass filter (7) that passes radiation of a first wavelength corresponding substantially to a characteristic wavelength of the first class of diamonds;
cycling the wavelength passed by the filter (7) a number of times through each wavelength of a set of wavelengths including the characteristic wavelength and at least two reference wavelengths by repeatedly rotating the filter;
making a plurality of observations of the diamond (1) at each of the wavelengths of said set and storing each of the observations; and
using the observations at the wavelengths of said set to classify the diamond 1) as belonging to the first class of diamonds or to the second class of diamonds.

2. The method of Claim 1, wherein the diamond (1) is observed at a large number of wavelengths, including the first wavelength and the two reference wavelengths.

3. The method of Claim 2, wherein:
the wavlength passed by the filter (7) is cycled a number of times through each wavelength of a set of wavelengths including the first and second reference wavelengths;
a plurality of observations of the diamond are made at each of the wavelengths of said set; and
the observations at the wavelengths of said set are used to classify the diamond as belonging to the first class of diamonds or not.

4. The method of any of the preceding Claims, further comprising using the observation at the second wavelength to correct the observations at the first wavelength and the reference wavelength to allow for spectral variations in the radiation irradiating the object.

5. The method of any of preceding Claims, wherein the intensity of radiation transmitted by the diamond (1) at the first wavelength and at the reference wavelengths is observed, and wherein the reference wavelengths lie substantially outside the absorption peak corresponding to the characteristic wavelength in the absorption spectrum of diamonds of the first class.

6. The method of Claim 5, wherein the diamond (1) is classified as belonging to the particular class of diamonds if the intensity of radiation absorbed at the first wavelength is greater than at the reference wavelengths.

7. The method of any of the preceding Claims, wherein the filter (7) is tilted about an axis (11) normal to its optical axis (15) to alter the band of radiation passed by the filter.

8. The method of any preceding Claim, wherein the first wavelength is substantially equal to 415.5nm, and the first class consists of type IaAB diamonds.

9. The method of Claim 8, comprising observing the diamond at a reference wavelength substantially equal to 410nm.

10. The method of any of the preceding claims wherein the characteristic wavelength and the reference wavelengths are close together.

11. Apparatus for classifying a diamond (1) as belonging to a first class consisting of definitely natural diamonds or to a second class comprising diamonds that may or may not be natural, comprising:
means (2) for irradiating the diamond (1);
a filter (7) which passes radiation at a first wavelength substantially corresponding to a characteristic wavelength of the first class;
means (12) for repeatedly rotating the filter to cyclically alter the band of radiation passed by the filter through each of a set of wavelengths including the first wavelength and at least two reference wavelengths different from the first wavelength;
means (6,8) for giving signals dependent upon the intensity of radiation passing through the filter (7), means (10) for storing each of the signals, and means (10) for classifying the diamond (1) as belonging to the first class of diamonds or belonging to said second class of diamonds on the basis of the signals.

12. The apparatus of Claim 11, wherein the signal giving means (6,8) is set up to give signals dependent upon the intensity of radiation transmitted by the diamond (1) at a large number of wavelengths, including the first wavelength and the two reference wavelengths.

13. The apparatus of Claim 12, further comprising means (12) for cyclically altering the band of radiation passed by the filter through each of a set of wavelengths including the first wavelength and the first and second reference wavelengths in order to give signals dependent upon the intensity of radiation passing through the filter at each of the wavelengths of the set.

14. The apparatus of any of Claims 11 to 13, wherein the filter (7) is tiltable about an axis (11) normal to the axis (15) of light coming from the diamond (1).

15. The apparatus of Claim 14, wherein the filter passes radiation of the first wavelength when it is normal to the optical axis (15).

16. The apparatus of any of Claims 11 to 15, wherein the first wavelength is substantially equal to 415.5nm, and the particular class of diamonds comprises type Ia A B diamonds.

## Patentansprüche

1. Verfahren zum Klassifizieren eines Diamanten (1) als zu einer ersten Klasse, die aus zweifellos natürlichen Diamanten besteht, oder zu einer zweiten Klasse gehörend, die Diamanten aufweist, die Naturdiamanten sein können oder nicht, mit den folgenden Schritten:
Bestrahlen des Diamanten (1);
Beobachten des Diamanten durch ein Schmalbandfilter (7), das Strahlung einer ersten Wellenlänge durchläßt, die im wesentlichen einer charakteristischen Wellenlänge der ersten Diamantklasse entspricht;
mehrmalige periodische Änderung der vom Filter (7) durchgelassenen Wellenlänge über jede Wellenlänge einer Wellenlängengruppe, welche die charakteristische Wellenlänge und mindestens zwei Vergleichswellenlängen enthält, durch wiederholtes Drehen des Filters;
Ausführen mehrerer Beobachtungen des Diamanten (1) bei jeder Wellenlänge der Gruppe und Speichern jeder der Beobachtungen; und
Verwendung der Beobachtungen bei den Wellenlängen der Gruppe, um den Diamanten (1) als zur ersten Diamantklasse oder zur zweiten Diamantklasse gehörend zu klassifizieren.

2. Verfahren nach Anspruch 1, wobei der Diamant (1) bei einer großen Zahl von Wellenlängen beobachtet wird, einschließlich der ersten Wellenlänge und der beiden Vergleichswellenlängen.

3. Verfahren nach Anspruch 2, wobei:
die von dem Filter (7) durchgelassene Wellenlänge mehrmals periodisch geändert wird und jede Wellenlänge einer Wellenlängengruppe durchläuft, welche die erste und die zweite Vergleichswellenlänge enthält;
bei jeder Wellenlänge der Gruppe mehrere Beobachtungen des Diamanten ausgeführt werden; und
die Beobachtungen bei den Wellenlängen der Gruppe verwendet werden, um den Diamanten als zur ersten Diamantklasse gehörend oder nicht dazugehörend zu klassifizieren.

4. Verfahren nach einem der vorstehenden Ansprüche, das ferner die Verwendung der Beobachtung bei der zweiten Wellenlänge zur Korrektur der Beobachtungen bei der ersten Wellenlänge und der Vergleichswellenlänge aufweist, um spektrale Schwankungen der Strahlung zuzulassen, mit der das Objekt bestrahlt wird.

5. Verfahren nach einem der vorstehenden Ansprüche, wobei die vom Diamanten (1) bei der ersten Wellenlänge und bei den Vergleichswellenlängen durchgelassene Strahlungsintensität beobachtet wird, und wobei die Vergleichswellenlängen im wesentlichen außerhalb des Absorptionsmaximums liegen, das der charakteristischen Wellenlänge im Absorptionsspektrum von Diamanten der ersten Klasse entspricht.

6. Verfahren nach Anspruch 5, wobei der Diamant (1) als zu der speziellen Diamantklasse gehörend klassifiziert wird, wenn die bei der ersten Wellenlänge absorbierte Strahlungsintensität höher als bei den Vergleichswellenlängen ist.

7. Verfahren nach einem der vorstehenden Ansprüche, wobei das Filter (7) um eine zu seiner optischen Achse (15) senkrechte Achse (11) geneigt wird, um den vom Filter durchgelassenen Strahlungsbereich zu ändern.

8. Verfahren nach einem der vorstehenden Ansprüche, wobei die erste Wellenlänge im wesentlichen gleich 415,5 nm ist und die erste Klasse aus Diamanten vom Typ IaAB besteht.

9. Verfahren nach Anspruch 8, das die Beobachtung des Diamanten bei einer Vergleichswellenlänge aufweist, die im wesentlichen gleich 410 nm ist.

10. Verfahren nach einem der vorstehenden Ansprüche, wobei die charakteristische Wellenlänge und die Vergleichswellenlängen nahe beieinander liegen.

11. Vorrichtung zum Klassifizieren eines Diamanten (1) als zu einer ersten Klasse, die aus zweifellos natürlichen Diamanten besteht, oder zu einer zweiten Klasse gehörend, die Diamanten aufweist, die Naturdiamanten sein können oder nicht, wobei die Vorrichtung aufweist:
eine Einrichtung (2) zum Bestrahlen des Diamanten (1);
ein Filter (7), das Strahlung einer ersten Wellenlänge durchläßt, die im wesentlichen einer charakteristischen Wellenlänge der ersten Klasse entspricht;
eine Einrichtung (12) zum wiederholten Drehen des Filters, um den vom Filter durchgelassenen Strahlungsbereich periodisch zu ändern und jede Wellenlänge aus einer Wellenlängengruppe durchlaufen zu lassen, welche die erste Wellenlänge und mindestens zwei von der ersten Wellenlänge verschiedene Vergleichswellenlängen enthält;
eine Einrichtung (6, 8) zur Signalgabe in Abhängigkeit von der durch das Filter (7) durchgelassenen Strahlungsintensität, eine Einrichtung (10) zum Speichern jedes der Signale, und eine Einrichtung (10) zum Klassifizieren des Diamanten (1) auf der Basis der Signale als zu der ersten Diamantklasse oder zu der zweiten Diamantklasse gehörend.

12. Vorrichtung nach Anspruch 11, wobei die Signalgabeeinrichtung (6, 8) so aufgebaut ist, daß sie Signale übermittelt, die von der Strahlungsintensität abhängen, die von dem Diamanten (1) bei einer großen Anzahl von Wellenlängen einschließlich der ersten Wellenlänge und der beiden Vergleichswellenlängen durchgelassen wird.

13. Vorrichtung nach Anspruch 12, die ferner eine Einrichtung (12) aufweist, um den von dem Filter durchgelassenen Strahlungsbereich periodisch über jede Wellenlänge einer Wellenlängengruppe zu ändern, welche die erste Wellenlänge und die ersten und zweiten Vergleichswellenlängen enthält, um Signale zu übermitteln, die von der bei jeder Wellenlänge der Gruppe durch das Filter durchgelassenen Strahlungsintensität abhängen.

14. Vorrichtung nach einem der Ansprüche 11 bis 13, wobei das Filter (7) um eine Achse (11) geneigt werden kann, die senkrecht zur Achse (15) des vom Diamanten (1) herkommenden Lichts ist.

15. Vorrichtung nach Anspruch 14, wobei das Filter Strahlung der ersten Wellenlänge durchläßt, wenn es senkrecht zur optischen Achse (15) steht.

16. Vorrichtung nach einem der Ansprüche 11 bis 15, wobei die erste Wellenlänge im wesentlichen gleich 415,5 nm ist, und wobei die spezielle Diamantklasse Diamanten vom Typ IaAB aufweist.

## Revendications

1. Procédé de classification d'un diamant (1) comme appartenant à une première catégorie constituée de diamants naturels de manière certaine ou à une seconde catégorie constituée de diamants qui peuvent être ou non naturels, comprenant les étapes consistant à:
irradier le diamant (1);
observer le diamant à travers un filtre passe-bande à bande étroite (7) qui laisse passer les radiations d'une première longueur d'onde correspondant sensiblement à une longueur d'onde caractéristique de la première catégorie de diamants;
cycler la longueur d'onde transmise par le filtre (7) un certain nombre de fois en la faisant passer par chaque longueur d'onde d'un ensemble de longueurs d'onde comprenant la longueur d'onde caractéristique et au moins deux longueurs d'onde de référence, en tournant le filtre de façon répétée;
réaliser une pluralité d'observations du diamant (1) à chacune des longueurs d'onde dudit ensemble et stocker chacune des observations; et
utiliser les observations aux longueurs d'onde dudit ensemble pour classifier le diamant (1) comme appartenant à la première catégorie de diamants ou à la seconde catégorie de diamants.

2. Procédé selon la revendication 1, dans lequel le diamant (1) est observé à un grand nombre de longueurs d'onde, comprenant la première longueur d'onde et les deux longueurs d'onde de référence.

3. Procédé selon la revendication 2, dans lequel:
la longueur d'onde transmise par le filtre (7) est cyclée un certain nombre de fois en passant par chaque longueur d'onde d'un ensemble de longueurs d'onde comprenant les première et seconde longueurs d'onde de référence;
plusieurs observations du diamant sont réalisées à chacune des longueurs d'onde dudit ensemble; et
les observations aux longueurs d'onde dudit ensemble sont utilisées pour classifier le diamant comme appartenant ou non à la première catégorie de diamants.

4. Procédé selon l'une quelconque des revendications précédentes, comprenant en outre l'étape consistant à utiliser l'observation à la seconde longueur d'onde pour corriger les observations à la première longueur d'onde et à la longueur d'onde de référence, afin de permettre des variations spectrales des radiations irradiant l'objet.

5. Procédé selon l'une quelconque des revendications précédentes, dans lequel l'intensité de la radiation transmise par le diamant (1) à la première longueur d'onde et aux longueurs d'onde de référence est observée, et dans lequel les longueurs d'onde de référence se trouvent sensiblement à l'extérieur du pic d'absorption correspondant à la longueur d'onde caractéristique du spectre d'absorption des diamants de la première catégorie.

6. Procédé selon la revendication 5, dans lequel le diamant (1) est classifié comme appartenant à la catégorie particulière de diamants si l'intensité de la radiation absorbée à la première longueur d'onde est supérieure à celle aux longueurs d'onde de référence.

7. Procédé selon l'une quelconque des revendications précédentes, dans lequel le filtre (7) est incliné autour d'un axe (11) normal à son axe optique (15), de façon à modifier la bande de radiation transmise par le filtre.

8. Procédé selon l'une quelconque des revendications précédentes, dans lequel la première longueur d'onde est quasi égale à 415,5 nm, et la première catégorie est constituée de diamants de type IaAB.

9. Procédé selon la revendication 8, comprenant l'étape consistant à observer le diamant à une longueur d'onde de référence quasi égale à 410 nm.

10. Procédé selon l'une quelconque des revendications précédentes, dans lequel la longueur d'onde caractéristique et les longueurs d'onde de référence sont proches les unes des autres.

11. Dispositif de classification d'un diamant (1) comme appartenant à une première catégorie constituée de diamants naturels de manière certaine, ou à une seconde catégorie constituée de diamants qui peuvent être ou non naturels, comprenant:
un moyen (2) pour irradier le diamant (1);
un filtre (7) qui laisse passer les radiations à une première longueur d'onde correspondant sensiblement à une longueur d'onde caractéristique de la première catégorie;
un moyen (12) pour faire tourner de façon répétée le filtre, afin de modifier de façon cyclique la bande de radiation transmise par le filtre en la faisant passer par chacune d'un ensemble de longueurs d'onde comprenant la première longueur d'onde et au moins deux longueurs d'onde de référence différentes de la première longueur d'onde;
un moyen (6, 8) pour envoyer des signaux dépendant de l'intensité de la radiation traversant le filtre (7), un moyen (10) pour stocker chacun des signaux, et un moyen (10) pour classifier le diamant (1) comme appartenant à la première catégorie de diamants ou comme appartenant à ladite seconde catégorie de diamants, sur la base des signaux.

12. Dispositif selon la revendication 11, dans lequel le moyen envoyant des signaux (6, 8) est réglé de façon à envoyer des signaux dépendant de l'intensité de la radiation transmise par le diamant (1), à un grand nombre de longueurs d'onde, comprenant la première longueur d'onde et les deux longueurs d'onde de référence.

13. Dispositif selon la revendication 12, comprenant en outre un moyen (12) pour modifier de façon cyclique la bande de radiation transmise par le filtre en la faisant passer par chacune d'un ensemble de longueurs d'onde comprenant la première longueur d'onde et les première et seconde longueurs d'onde de référence, afin d'envoyer des signaux dépendant de l'intensité de la radiation traversant le filtre à chacune des longueurs d'onde de l'ensemble.

14. Dispositif selon l'une quelconque des revendications 11 à 13, dans lequel le filtre (7) est inclinable autour d'un axe (11) normal à l'axe (15) de la lumière en provenance du diamant (1).

15. Dispositif selon la revendication 14, dans lequel le filtre laisse passer les radiations d'une première longueur d'onde, lorsqu'il est normal à l'axe optique (15).

16. Dispositif selon l'une quelconque des revendications 11 à 15, dans lequel la première longueur d'onde est quasi égale à 415,5 nm, et la catégorie particulière de diamants comprend les diamants de type IaAB.
